# EUROPEAN PATENT APPLICATION

(11) **EP 1 724 938 A1**
(43) Date of publication of application: **22.11.2006**
(21) Application number: 05010817.4
(22) Date of filing: 19.05.2005
(51) Int. Cl.: H04B 1/38

(54) **Antenna for foldable mobile phone**

(71) Applicant: Sony Ericsson Mobile Communications AB, 221 88 Lund (SE)
(72) Inventor: Ying, Zhinong, 226 49 Lund (SE)
(74) Representative: Asketorp, Göran

(57) **Abstract**

A portable communication apparatus (1) for receiving transmitted information. The portable communication apparatus comprises a first housing portion (2); a second housing portion (3) displacably connected to the first housing portion; and an antenna (10) divided into a first antenna portion (11), a second antenna portion (12), and a third antenna portion (13). The first antenna portion is positioned in the first housing portion; the second antenna portion is positioned in the second housing portion; and the third antenna portion electrically connects the first antenna portion to the second antenna portion.

## Description

### Technical Field of the Invention

The present invention relates to a portable communication apparatus comprising a first and a second housing portion, in which a first and a second antenna portion are positioned.

### Description of Related Art

A portable communication apparatus may be arranged to provide communication of speech and/or data. Communication in several communication systems, such as GSM (Global System for Mobile communication) or UMTS (Universal Mobile Telecommunications System), may be supported. In each communication system, communication in one or several frequency bands, such as GSM 900, 1800, or 1900, may be provided. For wireless communication, an antenna has to be provided for each frequency band in question. The antenna may be an external antenna or an internal antenna.

Due to the requirement for supporting various functions in combination with the requirement of a handy size the overall space available within a housing of a portable communication apparatus is scarce. Thus, also the space available for an internal antenna may be limited.

Digital television, such as DVB (Digital Video Broadcast), is envisaged for integration in a portable communication apparatus. DVB-H (DVB: Handheld) is a standard being developed for broadcasting digital television to be received in a portable communication apparatus, such as a mobile terminal. DVB-H is proposed to operate in the 470-862 MHz frequency range.

As for other communication, receiving data for digital television in a portable communication apparatus requires an antenna. It is difficult to design an antenna for the 470-862 MHz frequency range to be used in a portable communication apparatus due to physical limitations. The length of an antenna for digital television may be in the range of 10-15 cm. An external antenna of this size may be too bulky for a portable communication apparatus, such as a mobile terminal. An internal antenna may be more attractive. However, it is a problem to add yet another internal antenna in a portable communication apparatus, as the space available is limited. The size of the antenna for digital television makes the problem even more severe.

### Summary of the Invention

It is an object of the invention to provide a portable communication apparatus comprising an internal antenna.

The object is achieved by a portable communication apparatus for receiving transmitted information. The communication apparatus comprises a first housing portion, a second housing portion displacably connected to the first housing portion, and an antenna divided into a first antenna portion, a second antenna portion, and a third antenna portion. The first antenna portion is positioned in the first housing portion. The second antenna portion is positioned in the second housing portion. The third antenna portion electrically connects the first antenna portion to the second antenna portion.

The third antenna portion may be formed integrally with a connecting element for connecting the first housing portion to the second housing portion.

The first antenna portion, the second antenna portion and the third antenna portion may form a notch positioned in connection with the connecting element.

The connecting element may be a hinge mechanism. The first housing portion may be pivotable relative the second housing portion.

The antenna may comprise a matching loop for matching the impedance of the antenna to the input impedance of circuitry to which the antenna is connected. The matching loop may be formed by a conductor connected to the first antenna portion, the second antenna portion, and an antenna output terminal.

The second antenna portion may form a ground plane. Furthermore, the second antenna portion may be electrically connected to the second housing portion.

The second housing portion may be designed to be held in the palm of a user during operation.

The antenna may be designed for operation in the 470-860 MHz frequency band.

The portable communication apparatus may be a portable or handheld mobile radio communication equipment, a mobile radio terminal, a mobile telephone, a pager, a communicator, an electronic organizer, a smartphone or a laptop computer.

Further embodiments of the invention are defined in the dependent claims.

It is an advantage of the invention that the utilization of the available space within the housing of the portable communication apparatus is high. Thus, the antenna is suitable for receiving signals having a frequency of approximately 400 MHz and above.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of the invention, reference being made to the accompanying drawings, in which:
Fig. 1 is a front view of a portable communication apparatus; and
Fig. 2 is a front-view of an embodiment of an antenna according to the invention.

### Detailed Description of Embodiments

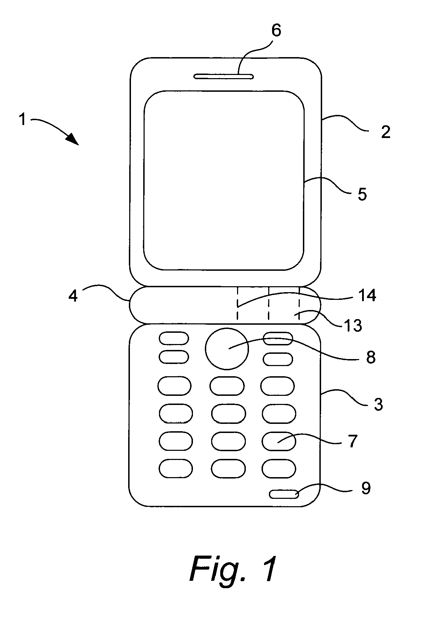

Fig. 1 illustrates a portable communication apparatus 1. The portable communication apparatus may be a portable or handheld mobile radio communication equipment, a mobile radio terminal, a mobile telephone, a pager, a communicator, an electronic organizer, a smartphone or a laptop computer. In the embodiment according to Fig. 1, the portable communication apparatus 1 is embodied as a mobile terminal.

The portable communication apparatus 1 has a first housing portion 2 and a second housing portion 3. The first housing portion and the second housing portion may be displaceable relative each other. Thus, the portable communication apparatus may have a more convenient form when it is in a non-operable state or in a standby mode. A connecting element 4 may be arranged to connect the first housing portion 2 to the second housing portion 3, such that they are displaceable or disconnectable.

The first housing portion 2 may comprise various components, such as a display 5 and a loudspeaker 6. The second housing portion 3 may comprise various components, such as a keypad 7, a rocker pad 8 or joystick, actuation keys and a microphone 9. The connecting element 4 may be a hinge mechanism. Thus, the first housing portion 2 may be pivotable relative the second housing portion 3. In the embodiment of Fig. 1, the portable communication apparatus 1 is a so-called clamshell type portable communication apparatus. Alternatively or in addition, the housing portions may be linearly moveable, e.g. slidable, in relation to each other by a link or slide mechanism.

The hinge mechanism may comprise at least a first and a second cylindrical portion. The first cylindrical portion may be connected to the first housing portion 2. The second cylindrical portion may be connected to the second housing portion 3. A pin centrally connected to the first and the second cylindrical portion, respectively, may hold the first and the second cylindrical portion together. The third antenna element 13 may be arranged on the outside of the pin.

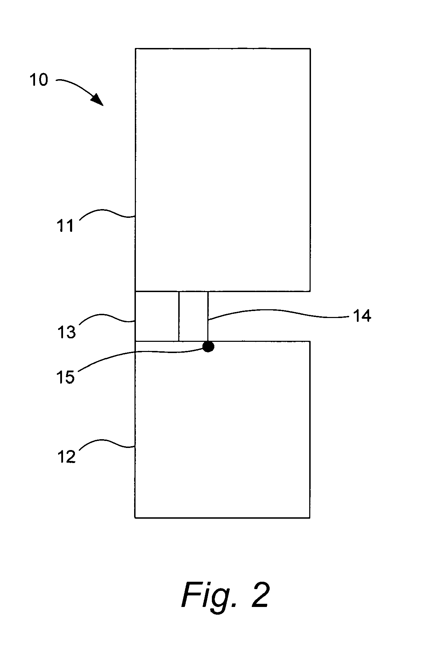

Fig. 2 illustrates an antenna 10 arranged internally in the first housing portion 2 and the second housing portion 3. The antenna 10 includes a first antenna portion 11, a second antenna portion 12, and a third antenna portion 13. The first antenna portion 11 is positioned in the first housing portion 2. The second antenna portion 12 is positioned in the second housing portion 3. The third antenna portion 13 connects the first antenna portion 2 to the second antenna portion 3. It is an advantage of the invention that the antenna is positioned in the first and the second housing portion 2, 3 as the utilization of available space then becomes high.

The third antenna portion 13 may be positioned between the first antenna portion 11 and the second antenna portion 12. The first antenna portion 11, the second antenna portion 12 and the third antenna portion 13 may form a notch. Thus, the antenna 10 may be a shunt-fed monopole antenna.

The third antenna portion 13 may be formed integrally with or in connection with the connecting element 4. The third antenna portion 13 may be positioned at one end of the connecting element, which is illustrated with phantom lines in Fig. 1. Connectors and/or cables between the first housing portion 2 and the second housing portion 3 may be arranged together with the third antenna portion 13. Thus, the connectors and/or cables will not affect the antenna performance. The connecting element 4 may be made of a nonconducting or dielectric material, such as plastic, in order to have as small as possible influence on the antenna performance. Then, the notch may be arranged in or integrally with the connecting element 4.

The third antenna element may be made of any conducting material such as a metal plate or a flexible conducting strip made of a conducting material.

As mentioned, the first housing portion 2 and the second housing portion 3 may be displaceable relative each other. Consequently, the first antenna portion 11 and the second antenna portion 12 may also be displaceable, e.g. pivotable or slidable, relative each other. When the first housing portion 2 is in a first position, such as in a closed position, relative the second housing portion 3, the antenna 10 may be in a non-operable state. When the first housing portion 2 is in a second position, such as in an open position (Fig. 1), relative the second housing portion 3, the antenna 10 may be in an operable state. An operable form of the notch is provided when the first antenna portion 11 is in the second position. It is an advantage of the invention that the first and the second antenna portion 11, 13 are displaceable relative to each other. Even though the antenna is quit large, since it may only be marginally smaller than the size of the portable communication apparatus 1, it may be provided within the constraints of providing a handy portable communication apparatus.

The antenna 10 may comprise a matching network for matching the impedance of the antenna 10 to the input impedance of circuitry, such as receiver circuitry, to which the antenna 10 is connected. A conductor 14 may be electrically connected to the first antenna portion 11 and the second antenna portion 12 and be arranged in the notch. The conductor 14 may also be electrically connected to an antenna output terminal 15, such as an antenna contact. Thus, the first antenna portion 11, the second antenna portion 12, the third antenna portion 13 and the conductor 14 may form a matching loop for providing the matching network.

The size of the matching loop sets the impedance of the antenna 10. Arranging the conductor 14 in the notch closer to or further away from the third antenna portion 13 may thus adjust the impedance of the antenna 10.

In one embodiment, the first antenna portion 11 may act as the monopole part of the antenna 10. The electrical length of the first antenna portion 11 may be optimized at substantially a quarter wavelength of the center frequency of the frequency band for which the antenna is designed. Thus, if the antenna is designed for DVD-H operating in the 470-862 MHz, the electrical length of the first antenna portion 11 is approximately 11 cm at a center frequency of 666 MHz. However, this length is only exemplifying. The antenna could be tuned for other frequency ranges, wherein the electrical length of the antenna would be different. The width of the antenna may influence the frequency range for which the antenna is used.

For proper operation, the monopole antenna requires a ground plane, which may be provided by the second antenna portion 12. The larger area of the second antenna portion 12, the better reception capability the antenna 10 will provide. In one embodiment, the area of the second antenna portion 12 is substantially equal to the area of the first antenna portion 11. In another embodiment, the area of the second antenna portion is larger than the area of the first antenna portion 11. The bandwidth of the antenna 10 is improved when the area of the second antenna portion 12 is larger than the area of the first antenna portion 11.

The antenna 10 may be in an operative mode when the notch is formed by the first antenna portion 11 and the second antenna portion 12. The notch may be formed when the first antenna portion 2 and the second antenna portion 3 are in an open state. In one embodiment, the notch is formed when the first antenna portion 11 and the second antenna portion 3 are positioned with an angle in the range of 135-180 degrees relative each other. However, in other embodiments the angle between the first and second antenna portion is different in the operative mode. The actual angle may be dependent on the connecting element 4 and the size of the third antenna element 13.

The second housing portion 3 may have a form and be designed to be held in the palm of a user during use. Also, the second antenna portion 12 may be electrically connected to the second housing portion 3. Thus, when the antenna 1 is in the operable mode, the user will increase the size of the ground plane when holding the second housing portion in the hand/palm. When the size of the ground plane is increased the reception capability of the antenna increases. Thus the signal to noise ratio of a received signal received by the antenna 10 is improved.

A PI matching network may be provided between the antenna 10 output terminal and the circuitry to which the antenna 10 is connected. Whether a PI matching network is necessary or not depends on the size (electrical length) of the first antenna portion 11 relative the frequency range to which it should be tuned, i.e. its resonance frequency. Also, the size of the second antenna portion (area) may influence the need of the PI matching network. The PI matching network may set the bandwidth in which the antenna is operable. Thus, the size of the antenna 10 may be somewhat decreased and still be operable in the desired frequency range if a PI matching network is provided.

The first antenna portion 11 and the second antenna portion 12 may have a rectangular shape. Thus, they may be provided as a layer in a multilayer PCB. Alternatively, the first antenna portion 11 and the second antenna portion 12 are provided by a separate conductor, e.g. a metal sheet. Using a PCB has the advantage that it is space efficient. A PCB may be provided for various circuitries in the portable communication apparatus 1. Adding the first antenna portion 11 and the second antenna portion 12 to PCBs in the first housing portion 2 and the second housing portion 3, respectively, thus requires very little space and is cheap. Furthermore, a PCB is flat. If the first antenna portion 11 and the second antenna portion 11 are flat, the bandwidth of the antenna 10 is increased compared to curved antenna portions. Thus, the antenna may be made even shorter and still achieve sufficient bandwidth. However, curved rectangular antenna portions may be utilized if desired. The bandwidth may also be set by the width of the antenna 10, the position of the notch relative the second antenna portion 11, and the size and form of the notch (length and width).

In the embodiment shown in Fig. 1, the connecting element 4 is positioned along the width of the first and the second housing portions 2, 3. In another embodiment, the connecting element may be positioned along the length of the first and the second housing portions 2, 3.

The antenna 10 may have the following design for reception of signals in the 470-862 MHz frequency range:
Electrical length of first antenna portion: 8-14 cm
Electrical width of first antenna portion: 3-6 cm
Electrical length of second antenna portion: 8-14 cm
Electrical width of second antenna portion: 3-6 cm
Electrical length of third antenna portion: 6-12 cm
Electrical width of third antenna portion: 3-6 cm
Antenna impedance: 50 Ω;
PI matching network: LC network
Theses values are only exemplifying. Other values could apply in this as well as in other frequency ranges, which have to be tested and evaluated in each specific case. The electrical dimensions of the antenna 10 may correspond to the physical dimensions of the antenna 10.

In another embodiment, the portable communication apparatus is a stick mobile terminal and an accessory device. The accessory device may e.g. comprise a digital TV module including a receiver for receiving broadcasted signals. The first antenna portion 11 may be arranged in a housing of the stick mobile terminal. The second antenna portion 12 may be arranged in a housing of the accessory device. The stick mobile terminal and the accessory device may be disconnectable. The connecting element may be provided by a connector, such as an accessory connector comprising male and female contacts. Some of the contacts of the connector may comprise conductors functioning as the third antenna portion 13 and conductor 14, and be arranged at one end of the connecting element. The notch may be formed at the other end of the connecting element. Thus, the notch is formed in connection with the connecting element.

The first antenna portion 11, and the second antenna portion 12 may be flat patch elements. Alternatively, they are curved patch elements. Similarly, the third antenna portion 13 may be a patch element, having a shape for incorporation into the connecting element.

In one embodiment, the first housing portion and the second housing portion are slidable relative each other. The first antenna portion 11 is positioned in a first housing portion and the second antenna portion 12 positioned in a second housing portion. The housing portions may be sufficiently slidable relative each other to provide the notch when the housing portions are displaced away from each other. Thus, the notch need not be arranged in connection with any connecting element. The third antenna portion 13 and the conductor 14 may be provided by a conducting flexible film. The first housing portion may have a groove at each of its longitudinal edges. The second housing portion may have hooks mating with the grooves at its longitudinal edges. Thus, the first housing portion may be linearly displaceable relative to the second housing portion.

The present invention has been described above with reference to specific embodiments. However, other embodiments than the above described are equally possible within the scope of the invention. The different features of the invention may be combined in other combinations than those described. The scope of the invention is only limited by the appended patent claims.

## Claims

1. A portable communication apparatus (1) for receiving transmitted information, comprising:
a first housing portion (2);
a second housing portion (3) displacably connected to the first housing portion; and
an antenna (10) divided into a first antenna portion (11), a second antenna portion (12), and a third antenna portion (13); wherein
the first antenna portion is positioned in the first housing portion;
the second antenna portion is positioned in the second housing portion; and
the third antenna portion electrically connects the first antenna portion to the second antenna portion.

2. The portable communication device according to claim 1, wherein the third antenna portion (13) is formed integrally with a connecting element (4) for connecting the first housing portion (2) to the second housing portion (3).

3. The portable communication device according to claim 2, wherein the first antenna portion (11), the second antenna portion (12) and the third antenna portion (13) form a notch positioned in connection with the connecting element (4).

4. The portable communication device according to claim 3, wherein the connecting element (4) is a hinge mechanism, and the first housing portion (2) is pivotable relative the second housing portion (3).

5. The portable communication apparatus according to any of the previous claims, comprising a matching loop for matching the impedance of the antenna to the input impedance of circuitry to which the antenna (10) is connected, said loop being formed by a conductor (14) connected to the first antenna portion (11), the second antenna portion (12), and an antenna output terminal (15).

6. The portable communication apparatus according to any of the previous claims, wherein the second antenna portion (12) forms a ground plane.

7. The portable communication apparatus according to claim 6, wherein the second antenna portion (12) is electrically connected to the second housing portion (3).

8. The portable communication apparatus according to any of the previous claims, wherein the second housing portion (3) is designed to be held in the palm of a user during operation.

9. The portable communication device according to any of the previous claims, wherein the antenna (10) is designed for operation in the 470-860 MHz frequency band.

10. The portable communication apparatus according to any of the previous claims, wherein the portable communication apparatus (10) is a portable or handheld mobile radio communication equipment, a mobile radio terminal, a mobile telephone, a pager, a communicator, an electronic organizer, a smartphone or a laptop computer.
